# FASCICULE DE BREVET EUROPEEN

(11) **EP 1 781 939 B1**
(45) Date de publication et mention de la délivrance du brevet: **26.05.2010**
(21) Numéro de dépôt: 05797584.9
(22) Date de dépôt: 09.08.2005
(51) Int. Cl.: F02N 11/08

(54) **PROCEDE D'INHIBITION DE LA COMMANDE D'ARRÊT AUTOMATIQUE DU MOTEUR THERMIQUE D'UN VEHICULE LORS DE MANOEUVRES DE STATIONNEMENT**
VERFAHREN ZUR HEMMUNG DES AUTOMATISCHEN STOPPSTEUERSYSTEMS EINER WÄRMEKRAFTMASCHINE IN EINEM FAHRZEUG BEI PARKMANÖVERN
METHOD OF INHIBITING THE AUTOMATIC STOP CONTROL SYSTEM OF THE HEAT ENGINE OF A VEHICLE DURING PARKING MANOEUVRES

(30) Priorité: 27.08.2004 FR 0451913
(43) Date de publication de la demande: 09.05.2007
(73) Titulaire: PEUGEOT CITROËN AUTOMOBILES S.A., 78140 Vélizy Villacoublay (FR)
(72) Inventeur: CELISSE, Arnaud, F-75017 PARIS (FR); GUY, Jean-Emmanuel, F-78150 LE CHESNAY (FR); KLEIN, Hervé, F-92300 LEVALLOIS PERRET (FR); LEVASSEUR, Guillaume, F-92000 NANTERRE (FR)
(74) Mandataire: Ménès, Catherine
(86) Numéro de dépôt international: PCT/FR2005/050663
(87) Numéro de publication internationale: WO 2006/027512

(56) Documents cités:
- EP-A- 1 052 399
- EP-A- 1 227 230
- US-A- 4 192 279
- US-A- 4 364 343
- US-A1- 2003 087 724
- US-B1- 6 371 889

## Description

La présente invention concerne un procédé de commande de l'arrêt et du démarrage automatique d'un moteur thermique équipant un véhicule du type automobile ou routier.

La présente invention concerne plus particulièrement la non-autorisation de l'arrêt du moteur lors de manoeuvres de stationnement.

Les constructeurs de véhicules équipés de moteurs thermiques, tels que les véhicules automobiles ou routiers, cherchent en permanence des solutions techniques susceptibles de réduire la consommation et les émissions de polluants de ces moteurs.

Parmi les différentes solutions développées à ce jour, il a été proposé un système provoquant l'arrêt automatique du moteur dans toutes les phases d'utilisation du véhicule où le fonctionnement du moteur n'est pas nécessaire, telles que les phases où le véhicule est momentanément à l'arrêt et où le moteur continue malgré tout de fonctionner au ralenti, puis opérant le démarrage automatique du moteur lorsque le conducteur souhaite faire repartir son véhicule.

Cette solution d'arrêt et de démarrage automatique des moteurs, encore appelée par les Anglo-saxons "Stop and Start" ou "Stop and Go", a un potentiel important de réduction de la consommation des moteurs car on estime qu'en moyenne, pour un trajet donné, un véhicule est à l'arrêt, moteur tournant au ralenti pendant environ 20% du temps.

Un système "Stop and Start" comprend généralement un calculateur pour commander automatiquement l'arrêt et le démarrage du moteur thermique à partir d'informations appropriées sur le fonctionnement du véhicule. Ce calculateur comporte notamment des moyens aptes à identifier une phase de demande d'arrêt moteur, des moyens aptes à identifier une phase d'autorisation d'arrêt moteur pendant laquelle l'arrêt du moteur est effectivement possible et des moyens pour opérer l'arrêt effectif du moteur si les conditions "véhicule en phase de demande d'arrêt moteur" et "véhicule en phase d'autorisation d'arrêt moteur" sont réunies.

De la même manière un système "Stop and Start" comporte notamment des moyens aptes à identifier une phase de demande de démarrage moteur, des moyens aptes à identifier une phase d'autorisation de démarrage moteur pendant laquelle le démarrage du moteur est effectivement possible et des moyens pour opérer le démarrage effectif du moteur si les conditions "véhicule en phase de demande de démarrage moteur" et "véhicule en phase d'autorisation de démarrage moteur" sont réunies.

On appelle "phase de demande d'arrêt moteur" toute période temporelle pendant laquelle le conducteur marque sa volonté d'arrêter le moteur de son véhicule, le véhicule pouvant être arrêté ou encore roulant. Une telle volonté d'arrêt du moteur peut être caractérisée par différents critères, comme l'actionnement par le conducteur de la pédale de frein du véhicule.

On appelle "phase d'autorisation d'arrêt moteur" toute période pendant laquelle le fonctionnement du véhicule ne requière pas le fonctionnement du moteur et autorise donc son arrêt. Les conditions de fonctionnement du véhicule requérant le fonctionnement du moteur et ce, alors que le véhicule se trouve en phase de demande d'arrêt moteur, peuvent aussi bien concerner le fonctionnement même d'un équipement du véhicule que relever du seul agrément de conduite. Ces conditions s'opposant à l'arrêt du moteur sont caractérisées par des critères variés telle que par exemple la température de l'eau de refroidissement moteur inférieure à une valeur de seuil prédéterminée. En effet, un moteur doit atteindre une certaine température pour fonctionner de façon optimale, il n'est donc pas opportun de retarder la montée en température du moteur en l'arrêtant trop tôt après son démarrage.

On appelle "phase de demande de démarrage moteur" toute période temporelle pendant laquelle le fonctionnement du véhicule requière le démarrage du moteur. Les conditions de fonctionnement du véhicule requérant un tel démarrage se déduisent généralement des conditions s'opposant à l'arrêt du moteur.

On appelle "phase d'autorisation de démarrage moteur" toute période pendant laquelle le fonctionnement du véhicule n'interdit pas le démarrage du moteur. Les conditions de fonctionnement s'opposant à un démarrage peuvent être liées par exemple à l'état ouvert ou fermé de l'embrayage et/ou à l'état de la transmission, vitesse engagée ou non.

Le document WO-98/14702 décrit un système "Stop and Start". Ce système comprend une carte électronique qui commande l'arrêt ou le démarrage du moteur thermique à partir des informations fournies par deux capteurs :
- un capteur de position de la pédale d'embrayage ;
- un capteur de position du frein à main.

Si la pédale d'embrayage n'est pas enfoncée et si le frein à main est actionné, alors le moteur est arrêté automatiquement. Si la pédale d'embrayage est enfoncée et si le frein à main est relâché, alors le moteur est remis en route automatiquement.

Ce système utilise aussi un capteur de régime du moteur qui désactive la carte électronique si le régime du moteur est au-dessus d'un certain seuil et un capteur de température du moteur qui désactive également la carte électronique si le moteur n'a pas atteint sa température de fonctionnement.

Un tel système permet bien de réduire la consommation du moteur thermique en minimisant les phases de fonctionnement au ralenti du moteur. Toutefois, la réduction de consommation générée par un tel système ne semble pas particulièrement optimisée.

En effet, les phases de demande d'arrêt du moteur sont ici simplement limitées aux périodes d'actionnement du frein de parking. Quant aux phases d'autorisation de l'arrêt moteur, elles ne sont définies qu'à partir d'un nombre très limité de conditions de fonctionnement du véhicule s'opposant à l'arrêt du moteur, à savoir les fonctionnements "moteur froid" ou encore les fonctionnements à vitesse de rotation élevée.

Avec un tel système, tout arrêt du véhicule pour lequel il n'est pas procédé à l'actionnement du frein de parking n'entraîne donc aucun arrêt du moteur, or ce type d'arrêt représente une proportion importante des phases d'arrêt véhicule. En effet, les conducteurs tirent rarement le frein à main en situation d'arrêt temporaire, comme lors d'arrêts à des feux tricolores de signalisation.

Par ailleurs, la solution décrite dans le document WO98/14702 est purement matérielle. Par conséquent, sa complexité et notamment celle de la carte électronique croît rapidement lorsque augmente le nombre d'informations prises en compte pour opérer l'arrêt automatique du moteur.

La demande de brevet FR-A-2 816 891 déposée par la Demanderesse décrit un système "Stop and Start" plus perfectionné remédiant aux inconvénients des systèmes antérieurs en créant un système permettant de mettre en oeuvre des stratégies d'arrêt et de démarrage automatique du moteur sensiblement plus performantes.

Le système de commande de l'arrêt et du démarrage automatique d'un moteur thermique de véhicule objet de la demande FR-A-816891 comprend des moyens d'arrêt et de démarrage du moteur, des capteurs d'informations sur l'état du véhicule, des moyens de commande desdits moyens d'arrêt et de démarrage du moteur à partir des informations des capteurs et est caractérisé en ce que ces moyens de commande comportent un calculateur contenant un algorithme de commande dudit moteur agissant en fonction des données délivrées par lesdits capteurs d'informations.

Ce système permet donc de prendre en compte un plus grand nombre de situations de fonctionnement véhicule demandant l'arrêt du moteur et donc d'améliorer le gain en consommation généré par un plus grand nombre d'arrêts du moteur, tout en prenant en compte un plus grand nombre de conditions de fonctionnement du véhicule s'opposant à l'arrêt du moteur et ce, de façon notamment à limiter les éventuels impacts d'un arrêt du moteur sur le fonctionnement du véhicule et sur son agrément de conduite.

Un tel système permet ainsi de résoudre simplement des problèmes qui font appel à des stratégies de contrôle du moteur plus complexes prenant en compte un nombre important de conditions de fonctionnement du véhicule, comme lors d'une manoeuvre de stationnement ou de parking (créneau, etc.) pendant laquelle il n'est pas souhaitable d'arrêter le moteur.

Pour ce faire, l'algorithme de commande comprend des moyens de temporisation sensés éviter les arrêts inutiles du moteur lors d'une manoeuvre de parking.

Il est toutefois apparu qu'une simple temporisation était insuffisante pour discriminer une manoeuvre de parking proprement dite et que par ailleurs, la mise en oeuvre de cette temporisation en toute circonstance réduisait sensiblement le bénéfice de l'arrêt automatique du moteur sur la consommation en carburant du véhicule.

On peut encore citer par ailleurs le document EP1052399 qui décrit un procédé de commande de l'arrêt et de démarrage automatique d'un moteur thermique équipant un moteur de véhicule. Ce procédé prévoit de prendre en compte les manoeuvres de parking à partir d'une information position du levier de vitesses en « marche arrière », cette information déclenchant le démarrage du moteur.

On peut citer par ailleurs le document EP1227230 qui a également trait à un mécanisme d'arrét/démarrage automatique d'un moteur de véhicule automobile. Ce document ne prévoit pas de prendre en compte les manoeuvres de parking. Ce document liste toutefois une combinaison de plusieurs conditions qui conduisent à ne pas commander un arrêt du moteur, dont l'angle volant véhicule.

La présente invention vise donc à améliorer encore le procédé de commande du démarrage et de l'arrêt automatique d'un moteur en proposant un procédé de commande automatique de l'arrêt et du redémarrage d'un moteur qui discrimine mieux les manoeuvres de stationnement.

Le procédé selon l'invention concerne la commande de l'arrêt et du démarrage d'un moteur thermique équipant un véhicule du type selon laquelle il est nécessaire que le véhicule se trouve en phase de demande d'arrêt moteur et ne se trouve pas dans les conditions de fonctionnement prédéfinies s'opposant à l'arrêt du moteur pour que l'arrêt du moteur soit commandé ou qu'il est nécessaire que le véhicule se trouve en phase de demande de démarrage moteur et ne se trouve pas dans les conditions de fonctionnement prédéfinies s'opposant au démarrage du moteur pour que le démarrage du moteur soit commandé.

Selon l'invention, le procédé de commande de l'arrêt et du démarrage d'un moteur thermique est caractérisé en ce que les conditions de fonctionnement du véhicule s'opposant à l'arrêt du moteur comprennent les manoeuvres de stationnement du véhicule, ces manoeuvres de stationnement faisant l'objet de critères d'identifications spécifiques comprenant des informations sur le fonctionnement du mécanisme de direction par lequel le conducteur dirige son véhicule.

Selon une autre caractéristique du procédé de commande objet de la présente invention, les manoeuvres de stationnements sont identifiées à partir également d'information(s) sur l'état de fonctionnement du dispositif de transmission équipant le véhicule.

Selon une autre caractéristique du procédé de commande objet de la présente invention, l'identification d'une manoeuvre de stationnement utilise l'information de l'engagement de la marche arrière.

Selon une autre caractéristique du procédé de commande objet de la présente invention, les manoeuvres de stationnement sont également définies par le désengagement de la marche arrière depuis moins d'un laps de temps prédéterminé.

Selon une autre caractéristique du procédé de commande objet de la présente invention, les manoeuvres de stationnements sont identifiées à partir d'information(s) sur le fonctionnement du mécanisme de direction par lequel le conducteur dirige son véhicule.

Selon une autre caractéristique du procédé de commande objet de la présente invention, l'identification d'une manoeuvre de stationnement utilise les informations de braquage du volant de direction.

Selon une autre caractéristique du procédé de commande objet de la présente invention, l'identification d'une manoeuvre de stationnement utilise l'information du couple exercé sur le volant de direction par le conducteur.

Selon une autre caractéristique du procédé de commande objet de la présente invention, les manoeuvres de stationnement sont définies par un couple exercé sur le volant dépassant une valeur de seuil prédéterminée, cette valeur pouvant dépendre de la vitesse véhicule.

Selon une autre caractéristique du procédé de commande objet de la présente invention, les manoeuvres de stationnement sont également définies par un couple exercé sur le volant ayant repassé sous une valeur de seuil prédéterminée depuis moins d'un laps de temps prédéterminé.

L'invention sera mieux comprise à la lecture de la description qui va suivre, donnée uniquement à titre d'exemple et faite en se référant aux dessins annexés sur lesquels :
- la figure 1 représente une architecture matérielle de l'ensemble du système de mise en oeuvre du procédé selon l'invention ;
- la figure 2 représente un organigramme schématique du procédé selon l'invention.

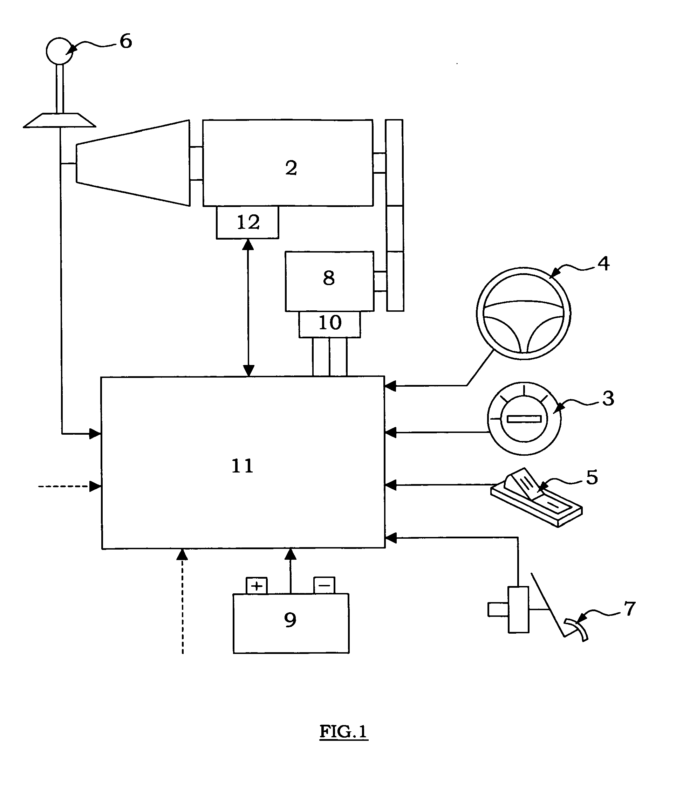

La figure 1 représente différents organes d'un véhicule automobile équipé d'un moteur thermique 2. Dans l'habitacle du véhicule, un commutateur 3 (avec ou sans clé) disposé à proximité du volant de direction 4 commande manuellement le démarrage ou l'arrêt du moteur 2 tandis qu'un moyen, tel qu'un commutateur à deux positions de type bouton poussoir 5, permet au conducteur d'activer ou d'inhiber le fonctionnement du véhicule en mode "Stop and Start", c'est-à-dire en mode d'arrêt et de démarrage automatique du moteur 2.

Le véhicule comporte par ailleurs un mécanisme de transmission dont le levier de changement de vitesses 6 est figuré ainsi qu'un dispositif de freinage commandé notamment par une pédale de frein 7.

Bien évidemment ces équipements ne sont pas limitatifs des autres équipements du véhicule qui n'ont pas été figurés tels que notamment un embrayage, un groupe moto-ventilateur pour refroidir le moteur 2, un dispositif de climatisation pour refroidir/chauffer l'habitacle ou encore un mécanisme de direction assistée, etc.

Le moteur thermique 2 est un moteur classique du type multi-cylindres à allumage commandé ou à allumage par compression (diesel). Ces types de moteur sont bien connus et ne seront donc pas détaillés plus avant. Le fonctionnement du moteur 2 est classiquement commandé par un calculateur de contrôle moteur 12 qui pilote notamment le débit de carburant.

Le moteur 2 coopère avec des moyens de démarrage appropriés telle qu'une machine électrique tournante réversible 8 formant alternato-démarreur. Une transmission de mouvement, par exemple par poulies et courroie, relie le rotor de l'alterno-démarreur 8 au vilebrequin du moteur 2.

Dans une variante de réalisation, le moteur 2 peut également coopérer avec un démarreur additionnel non figuré distinct de l'alterno-démarreur 8.

La machine 8 permet de transformer un mouvement de rotation du rotor inducteur, entraîné par le moteur thermique 2 du véhicule, en un courant électrique induit dans les bobinages du stator. Ce courant est alors destiné à alimenter en électricité le réseau de bord du véhicule et à charger la batterie 9 de ce véhicule.

La machine 8 peut également constituer un moteur électrique ou machine électrique tournante et entraîner en rotation, via l'arbre de rotor, le moteur thermique 2 du véhicule. Ainsi, l'alterno-démarreur 8 peut démarrer le moteur thermique 2 du véhicule automobile.

Cette machine 8 par exemple de type polyphasé fonctionne donc en alternateur pour, notamment, charger la batterie du véhicule et en démarreur pour entraîner le moteur à combustion interne, dit aussi moteur thermique, du véhicule automobile pour son démarrage. A cet effet, une unité de puissance connectée sur les phases de l'induit de l'alternateur sert de pont de commande de ces phases en mode moteur et fait office de pont redresseur lorsque l'alterno-démarreur 8 fonctionne en mode alternateur.

Une telle machine 8 est bien connue en elle-même et ne sera pas détaillée plus avant. Le document FR2842041 décrit par exemple une telle machine.

Le système mettant en oeuvre le procédé de commande automatique de l'arrêt et du démarrage du moteur selon l'invention comprend un calculateur 11 qui pilote via les calculateurs 10 et 12 le fonctionnement de la machine 8 et l'arrêt et le démarrage du moteur 2 et ce, à partir d'un certain nombre d'informations concernant le fonctionnement du véhicule.

Le calculateur 11 coopère en effet avec des capteurs d'information appropriés aptes à fournir en plus de la position du commutateur 3 ou du bouton 5, les informations requises sur le fonctionnement du véhicule telle que la vitesse de rotation du moteur 2, la vitesse du véhicule, la distance parcourue, la position de la pédale d'embrayage, la position de la pédale d'accélérateur, la position du levier de changement de vitesses 6, la position de la pédale de frein 7 et celle du levier de frein à main, le rapport de vitesse enclenchée dans la boîte de vitesses, la température d'eau de refroidissement du moteur, l'état de charge de la batterie 9, l'état de la climatisation, le couple exercé par le conducteur sur le volant, etc.

Il est important de remarquer que le calculateur 11 au sens de la présente invention est défini de façon plus générale comme étant tout système dans lequel peut être implanté un algorithme de commande à l'aide de moyens de programmation et contenant au moins une mémoire. Un réseau logique programmable du type ASIC pourrait être utilisé. Ce calculateur 11 peut être spécifique comme illustré ou bien encore être intégré à un autre calculateur comme, par exemple, les calculateurs 10 ou 12 ou bien encore intégré dans plusieurs calculateurs.

Le calculateur 11 opère une surveillance constante du fonctionnement du véhicule à partir d'un certain nombre d'informations transmises directement par des capteurs appropriés ou par l'intermédiaire d'autres calculateurs auxquels le calculateur 11 est connecté et, le moteur étant tournant, il en vérifie si le véhicule se trouve ou non en phase de demande d'arrêt moteur et en phase d'autorisation d'arrêt moteur et en déduit l'arrêt du moteur. De la même façon, le moteur étant arrêté, le calculateur 11 vérifie à partir des informations reçues si le véhicule se trouve ou non en phase de demande de démarrage et en phase d'autorisation du démarrage moteur et en déduit le démarrage du moteur.

Les phases de demande d'arrêt moteur sont définies par des critères de fonctionnement véhicule appropriés combinant le fait que le bouton 5 se trouve en position "non inhibé" et que notamment l'un des critères suivants soit observé :
- la position de la pédale de frein passe de "non appuyée" à "appuyée";
- le levier de vitesses est au neutre.

Pour ce qui est des phases d'autorisation d'arrêt moteur, elles sont définies à partir d'un certain nombre de critères identifiant des conditions de fonctionnement véhicule prédéfinies s'opposant à l'arrêt du moteur 2.

On pourra distinguer différents types de condition de fonctionnement véhicule susceptibles de définir ces phases d'autorisation :
- des conditions liées au véhicule proprement dit tels que les besoins moteur (température d'eau, etc.), les besoins d'assistance freinage, les besoins du réseau électrique de bord, les besoins thermiques habitacles, etc.;
- des conditions liées à l'agrément de conduite tels que des manoeuvres de parking, etc.;
- des conditions liées au conducteur.

Pour ce qui est des phases de demande de démarrage, elles se déduisent sensiblement des conditions s'opposant à l'arrêt du moteur.

Quant aux conditions s'opposant aux demandes de démarrage, elles comprennent notamment des situations liées à la transmission telle que l'existence d'une vitesse enclenchée.

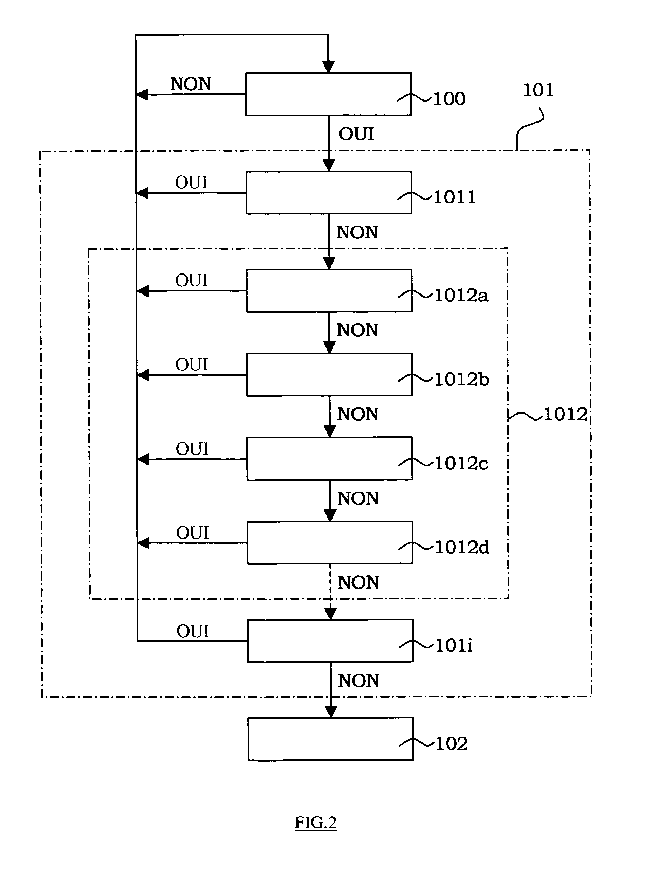

La figure 2 représente un exemple d'algorithme de commande mettant en oeuvre le procédé selon l'invention et contenu dans les mémoires électroniques du calculateur 11.

Il est à noter que l'architecture logicielle utilisée pour coder l'algorithme peut se décomposer en deux modules.

Un premier module appelé logiciel de bas niveau regroupe les commandes relatives à l'architecture matérielle utilisée telles que la lecture d'un signal sur l'une des entrées du microcontrôleur ou l'émission d'un signal de sortie. Ce logiciel de bas niveau est propre au microcontrôleur utilisé. Le second module appelé logiciel de haut niveau, est lui spécifique à l'application réalisée.

Dans la présente invention, le second module est utilisé pour implanter la stratégie de gestion des démarrages et des arrêts automatiques du moteur. Il est réalisé dans un langage de programmation tel que le langage C.

Une fois le moteur démarré et dans le cas où le commutateur 4 est dans la position dans laquelle la fonction d'arrêt automatique du moteur est activée, le calculateur 11 scrute régulièrement l'état de fonctionnement du moteur à partir des informations collectées et déroule donc de façon itérative les étapes ci-dessous.

Lors de l'étape de test 100, le calculateur 11 vérifie si véhicule est entré dans une nouvelle phase de demande d'arrêt moteur.

Une phase de demande d'arrêt est par exemple identifiée si le conducteur appuie sur la pédale de frein et/ou s'est mis au point mort (levier de vitesses en position neutre ou point mort) et que le bouton 5 est en position d'activation ou "non inhibé".

Lorsqu'une nouvelle phase de demande d'arrêt du moteur a été identifiée et pendant tout le temps que va durer cette phase de demande d'arrêt c'est-à-dire tout le temps que le conducteur garde son pied appuyé sur la pédale de frein et/ou demeure au point mort et que le bouton 5 est en position d'activation, le calculateur vérifie ensuite si le véhicule se trouve en phase d'autorisation d'arrêt moteur ou non et ce lors de l'étape 101.

L'arrêt effectif du moteur n'est, en effet, commandé que si les conditions de fonctionnement du véhicule le permettent c'est-à-dire si le véhicule ne se trouve pas dans l'une quelconque des conditions prédéterminées pour lesquelles l'arrêt du moteur n'est pas autorisé.

Les conditions s'opposant à l'arrêt du moteur sont donc, une à une, testées au cours de l'étape 101 et si aucune de ces conditions n'est rencontrée alors le moteur est arrêté à l'étape 102.

Si au moins une des conditions de fonctionnement du moteur s'opposant à l'arrêt du moteur se trouve vérifiée alors le moteur n'est pas arrêté et le moteur ne sera pas arrêté pendant toute la durée de la phase présente de demande d'arrêt véhicule même si la condition n'autorisant pas initialement l'arrêt vient à disparaître avant la fin de cette phase de demande d'arrêt. Le processus s'arrête donc là et l'on revient à l'étape 100.

En variante de réalisation on pourra également autoriser un arrêt si la condition n'autorisant pas initialement l'arrêt du moteur vient à disparaître avant un laps de temps T compté à partir de l'entrée en phase d'arrêt du véhicule.

L'étape 101 consiste donc en une série de tests 1011, 1012, 101i..., caractérisant chacun un fonctionnement du véhicule pour lequel l'arrêt du moteur n'est pas autorisé.

Ainsi, la sous-étape 1011 concerne le fonctionnement "moteur froid" du véhicule caractérisé notamment par une température d'eau de refroidissement inférieure à une valeur de seuil calibrée. Il est en effet important notamment pour la dépollution des gaz d'échappement du moteur de favoriser le plus possible la montée en température du moteur et donc de ne pas l'arrêter tant qu'il n'a pas atteint une température suffisante.

Ainsi, la sous-étape 1012 concerne le fonctionnement "manoeuvre de stationnement". Conformément à l'invention, parmi les conditions n'autorisant pas l'arrêt automatique du moteur figure le fonctionnement du véhicule dans des manoeuvres de stationnement. En effet, lors de manoeuvres de stationnement, tels qu'un enchaînement de créneaux, nécessaires pour garer le véhicule 1, il existe de nombreuses conditions d'immobilisation de courte durée du véhicule avant l'arrêt définitif pendant lesquelles il n'est pas très pertinent d'arrêter le moteur.

Conformément à l'invention, le procédé de commande du moteur opère la reconnaissance à partir d'informations appropriées d'un fonctionnement du véhicule caractéristique d'une manoeuvre de parking. Cette reconnaissance d'une manoeuvre de parking est réalisée conformément à l'exemple illustré à partir de deux informations distinctes : le passage de la marche arrière et la manoeuvre du volant de direction 4 et plus précisément du couple appliqué au volant.

Il en résulte que l'étape 1012 se décompose en une succession de quatre sous-étapes. A l'étape 1012a, on détermine si la marche arrière a été enclenchée. Si tel est bien le cas on n'arrête pas le moteur. Si tel n'est pas le cas on détermine alors à l'étape 1012b si une marche arrière a été enclenchée il y a moins d'un laps de temps prédéterminé Tma.

Cette valeur de temps calibrée Tma est par exemple fixée à trente secondes ou bien encore une minute. Si effectivement la marche arrière a été enclenchée il y a moins d'un temps Tma alors, là encore, le moteur n'est pas arrêté.

Si la marche arrière n'est pas enclenchée n'a pas été enclenchée depuis moins d'un temps Tma alors on procède à de nouvelles investigations lors des étapes 1012c et 1012d.

A l'étape 1012c on vérifie que le couple exercé sur le volant 4 est supérieur à une valeur de seuil prédéterminée Cv. Il est à noter que cette valeur de seuil Cv peut être une constante ou bien encore cartographiée en fonction de la vitesse véhicule.

Si le couple exercé sur le volant est supérieur à cette valeur de seuil alors le moteur n'est pas arrêté sinon on vérifie lors de l'étape 1012d si cette valeur de seuil n'a pas été dépassée il y a moins d'un laps de temps prédéterminé Tcv.

Cette valeur de temps calibrée Tcv est par exemple fixée à trente secondes ou bien encore à une minute. Si effectivement un couple supérieur au seuil Cv a été exercé il y a moins d'un temps Tcv alors, là encore, le moteur n'est pas arrêté.

Ainsi grâce à la mise en oeuvre du procédé selon l'invention, il est possible d'identifier de façon très précise le véhicule en condition de manoeuvre et d'opérer alors l'inhibition de la fonction d'arrêt et de démarrage automatique du moteur et ce, pour permettre un plus grand confort d'utilisation du véhicule au conducteur.

En effet, la Demanderesse a pu identifier que les conditions de manoeuvre du véhicule pouvaient être assez précisément identifiées par ces seules informations que sont le passage de la marche arrière et/ou le braquage des roues.

Bien évidemment la présente invention n'est pas limitée au mode particulier de réalisation décrit ci-dessus et on peut apporter à celui-ci de nombreux changements ou modifications sans sortir de la présente invention.

Ainsi, il est possible d'opérer l'identification des conditions de manoeuvre du véhicule avec uniquement le passage de la marche arrière ou uniquement le braquage des roues.

Ainsi, au lieu de prendre en compte le couple exercé sur le volant par le conducteur on peut prendre en compte l'angle de rotation du volant.

Ainsi, aux critères précités (marche arrière et/ou couple volant) définissant un fonctionnement de type "manoeuvres de stationnement" on peut leur ajouter ou leur substituer d'autres critères tel qu'une vitesse véhicule inférieure à une valeur de seuil calibré, la proximité d'autres véhicules ou d'obstacles fournie par des capteurs de proximité correspondants (camera, radar, lidar, etc.).

## Revendications

1. Procédé de commande de l'arrêt et du démarrage d'un moteur thermique (2) équipant un véhicule du type selon lequel il est nécessaire que le véhicule se trouve en phase de demande d'arrêt moteur et ne se trouve pas dans les conditions de fonctionnement prédéfinies s'opposant à l'arrêt dudit moteur (2) pour que l'arrêt du moteur (2) soit commandé ou qu'il est nécessaire que le véhicule se trouve en phase de demande de démarrage moteur et ne se trouve pas dans les conditions de fonctionnement prédéfinies s'opposant au démarrage dudit moteur (2) pour que le démarrage du moteur soit commandé, **caractérisé en ce que** lesdites conditions de fonctionnement du véhicule s'opposant à l'arrêt dudit moteur (2) comprennent les manoeuvres de stationnement du véhicule, lesdites manoeuvres de stationnement faisant l'objet de critères d'identifications spécifiques, lesdits critères d'identification utilisant une information sur le fonctionnement du mécanisme de direction par lequel le conducteur dirige son véhicule, ladite information concernant le couple exercé sur le volant de direction (4) par le conducteur.

2. Procédé de commande selon la revendication 1, **caractérisé en ce que** lesdits critères d'identification utilisent une information sur l'état de fonctionnement du dispositif de transmission équipant le véhicule.

3. Procédé de commande selon la revendication 2, **caractérisé en ce que** ladite information concerne l'engagement de la marche arrière.

4. Procédé de commande selon la revendication 3, **caractérisé en ce que** les manoeuvres de stationnement sont définies par le désengagement de la marche arrière depuis moins d'un laps de temps prédéterminé.

5. Procédé de commande selon la revendication 1, **caractérisé en ce que** lesdits critères d'identification utilisent une information sur le braquage du volant de direction (4).

6. Procédé de commande selon l'une quelconque des revendications 1 à 5, **caractérisé en ce que** les manoeuvres de stationnement sont définies par un couple exercé sur le volant (4) dépassant une valeur de seuil prédéterminée.

7. Procédé de commande selon la revendication 6, **caractérisé en ce que** ladite valeur prédéterminée est cartographiée en fonction de la vitesse véhicule.

8. Procédé de commande selon l'une quelconque des revendications 1 à 6, **caractérisé en ce que** les manoeuvres de stationnement sont définies par un couple exercé sur le volant (4) ayant repassé sous une valeur de seuil prédéterminée depuis moins d'un laps de temps prédéterminé.

## Claims

1. Method of controlling the stopping and starting of a heat engine (2) installed in a vehicle of the type in which it is necessary for the vehicle to be in the engine stop demand phase and not be in the predefined operating conditions opposed to the stopping of said engine (2) in order for the engine (2) to be stopped or in which it is necessary for the vehicle to be in the engine start demand phase and not be in the predefined operating conditions opposed to the starting of said engine (2) in order for the engine to be started, said method being **characterized in that** said vehicle operating conditions opposed to the stopping of said engine (2) include vehicle parking manoeuvres, said parking manoeuvres being covered by specific identification criteria, which identification criteria use information about the operation of the steering mechanism by which the driver steers the vehicle, which information relates to the torque applied to the steering wheel (4) by the driver.

2. Control method according to Claim 1, **characterized in that** said identification criteria use information about the state of operation of the transmission device installed in the vehicle.

3. Control method according to Claim 2, **characterized in that** said information relates to the engagement of reverse gear.

4. Control method according to Claim 3, **characterized in that** the parking manoeuvres are defined by disengagement of reverse gear within less than a predetermined period of time.

5. Control method according to Claim 1, **characterized in that** said identification criteria use information about the direction of the steering wheel (4).

6. Control method according to any one of Claims 1 to 5, **characterized in that** the parking manoeuvres are defined by a torque applied to the steering wheel (4) exceeding a predetermined threshold value.

7. Control method according to Claim 6, **characterized in that** said predetermined value is mapped as a function of the vehicle speed.

8. Control method according to one of Claims 1 to 6, **characterized in that** the parking manoeuvres are defined by a torque applied to the steering wheel (4) that has returned below a predetermined threshold value within less a predetermined period of time.

## Patentansprüche

1. Verfahren zur Steuerung des Stopps und des Starts eines Verbrennungsmotors (2), mit dem ein Fahrzeug ausgerüstet ist, des Typs, bei dem es erforderlich ist, dass sich das Fahrzeug in der Phase einer Motorstoppanforderung befindet und sich nicht unter vordefinierten Funktionsbedingungen befindet, die dem Stopp des Motors (2) entgegenstehen, damit der Stopp des Motors (2) gesteuert wird, oder bei dem es erforderlich ist, dass sich das Fahrzeug in der Phase einer Motorstartanforderung befindet und sich nicht unter vordefinierten Funktionsbedingungen befindet, die dem Start des Motors (2) entgegenstehen, damit der Start des Motors gesteuert wird, **dadurch gekennzeichnet, dass** die Funktionsbedingungen des Fahrzeugs, die dem Stopp des Motors (2) entgegenstehen, die Parkmanöver des Fahrzeugs umfassen, wobei die Parkmanöver unter spezifische Identifikationskriterien fallen, wobei die Identifikationskriterien eine Information über die Funktion des Lenkmechanismus verwenden, durch den der Fahrer sein Fahrzeug lenkt, wobei die Information das vom Fahrer auf das Lenkrad (4) ausgeübte Drehmoment betrifft.

2. Steuerverfahren nach Anspruch 1, **dadurch gekennzeichnet, dass** die Identifikationskriterien eine Information über den Funktionszustand der Getriebevorrichtung, mit der das Fahrzeug ausgerüstet ist, verwenden.

3. Steuerverfahren nach Anspruch 2, **dadurch gekennzeichnet, dass** die Information das Einlegen des Rückwärtsgangs betrifft.

4. Steuerverfahren nach Anspruch 3, **dadurch gekennzeichnet, dass** die Parkmanöver durch das Ausrücken des Rückwärtsgangs seit weniger als einer vorbestimmten verstrichenen Zeit definiert sind.

5. Steuerverfahren nach Anspruch 1, **dadurch gekennzeichnet, dass** die Identifikationskriterien eine Information über den Lenkeinschlag des Lenkrades (4) verwenden.

6. Steuerverfahren nach einem der Ansprüche 1 bis 5, **dadurch gekennzeichnet, dass** die Parkmanöver durch ein auf das Lenkrad (4) ausgeübtes Drehmoment definiert sind, das einen vorbestimmten Schwellenwert überschreitet.

7. Steuerverfahren nach Anspruch 6, **dadurch gekennzeichnet, dass** der vorbestimmte Wert in ein Kennfeld als Funktion der Fahrzeuggeschwindigkeit eingetragen ist.

8. Steuerverfahren nach einem der Ansprüche 1 bis 6, **dadurch gekennzeichnet, dass** die Parkmanöver durch ein auf das Lenkrad (4) ausgeübtes Drehmoment definiert sind, das seit weniger als einer vorbestimmten verstrichenen Zeit unter einen vorbestimmten Schwellenwert zurückgelaufen ist.
